# EUROPEAN PATENT SPECIFICATION

(11) **EP 3 219 288 B1**
(45) Date of publication and mention of the grant of the patent: **10.06.2020**
(21) Application number: 17000418.8
(22) Date of filing: 15.03.2017
(51) Int. Cl.: A61C 8/00

(54) **OSSEOINTEGRATED DENTAL CROWN**
IN DEN KNOCHEN INTEGRIERTE ZAHNPROTHESE
PROTHÈSE DENTAIRE OSTÉO-INTÉGRÉE

(30) Priority: 16.03.2016 IT UA20161738
(43) Date of publication of application: 20.09.2017
(73) Proprietor: DENTI E DENTI di Davide Buccolieri a company organized under the Laws of Italy, 16137 Genova (IT)
(72) Inventor: BUCCOLIERI, Davide, I-16137 Genova (IT)
(74) Representative: Aprà, Mario

(56) References cited:
- WO-A1-2006/008346
- ES-A1- 2 323 337
- KR-A- 20060 025 263
- US-A- 5 989 028

## Description

The present invention relates to an osseointegrated dental crown according to claim 1.

In the field of implant technology, primary importance is given to osseointegrated fixtures, i.e. screw and prosthetic connection endosseous fixtures, initially introduced by Branemark and consisting of three essential mutually connected elements: a screw for fixing to the mandible commonly called fixture, an intermediate element, called abutment, and the dental prosthesis (crown). The abutment mechanically connects the fixture with the crown installed on it.

Force is required to screw the fixture into the mandible bone and therefore the head of the fixture is usually provided with a mechanism for applying torsion force, for example a hexagonal projection (Branemark) that acts as a bolt and, once installed, performs an anti-rotational function of the abutment and of the crown integral therewith. Examples of this are provided by ES2323337 and US5989028.

The fixture-abutment connection is usually maintained through a suitable fixing screw that firmly connects the parts, adapting to their shape and to the aforesaid torsion system, ensuring an installation of the crown that is as precise, stable and easy to execute as possible.

Starting from the aforesaid solution with Branemark external hexagon, various solutions for mechanical coupling between abutment and fixture have been developed over time, among which internal hexagon connections in which the walls of the neck of the fixture are countersunk inward and terminate with a hexagon, multi-lobed connections in which the base of the abutment is designed to prevent rotation, and finally tapered connections without a specific geometric anti-rotational shape and in which the abutment is engaged in the fixture by means of tapered press fitting and stability is guaranteed by the mutual friction forces imparted by means of the fixing screw. Numerous solutions have progressively been added to these types of connections, based on a variety of geometries of mechanical connection, but all deriving from the original Branemark idea based on the concept of male/female coupling or vice versa between fixture and abutment and application of related fixing screw.

The aforesaid types of fixtures have numerous problems still not solved. Solutions with external connection, i.e. those deriving from Branemark, are relatively easy to install, as they allow pick up impressions to be taken directly on the head of the fixtures, but the emergence of fixing screws above the head outside the fixture at times can cause even significant esthetic and functional problems. In particular, in the case of unconventional positioning of the fixture in the mandible, the protrusion with respect to the head of the fixture, due to the presence of the external hexagon or of an equivalent shape, of the head of the fixing screw and the space for its housing can create noteworthy problems during restoration. Moreover, in solutions with external connection, the abutment has a greater tendency to loosen, above all in single teeth. Solutions with internal connections, i.e. those in which the female part is obtained in the head of the fixture rather than in the abutment, are typically sturdier, due to the presence of walls of greater length. In internal connections the fixing screw is housed much lower down and this makes it possible to solve the problems of protrusion typical of external connections, and therefore restore with decidedly greater angles of inclination and without esthetic problems. However, to the detriment of these important improvements, internal connections have a serious limitation of use, as pick up impressions are difficult to take fastening the transfers rigidly to one another. Due to the length of the walls of the internal connection and depending on the number and on the inclination of the fixtures, the rigid pick up impression may be impossible, making it necessary to use decidedly less precise impression solutions.

The object of the present invention is to provide an osseointegrated dental crown having a mechanical coupling between abutment and fixture that simultaneously ensures solidity and sturdiness of the connection, facilitates restoration and is easy to use, overcoming the problems of common external and internal couplings and providing an economically advantageous solution, simple to produce and with excellent performance in terms of functional efficiency.

The aforesaid object is achieved by means of a double mechanical coupling between abutment and fixture that improves the conventional approach with single coupling of male/female type used to date.

The subject matter of the present invention is a hybrid osseointegrated dental crown in which the abutment and fixture components have a complex profile, in which the characteristics of internal, external and pseudo tapered couplings are simultaneously present. At macroscopic level, the crown proposed is based on a truncated pyramid with a hexagonal base and further characterized by a small hexagonal protrusion located on the head of the fixture, but lower down than conventional external hexagons, being positioned centrally on the bottom of a special convex countersink obtained on the head of the fixture and adapted to accommodate the insertion of the aforesaid truncated pyramid. This configuration makes it possible to obtain the stability typical of internal connections, the ductility and ease of installation typical of external connections and can provide further advantages deriving from taper press fitting without compromising anti-rotation constraint.

Further characteristics and advantages of the technical solution proposed will be more apparent in the following description of a preferred but not exclusive embodiment, represented by way of non-limiting example in the accompanying drawings, wherein:
- Fig. 1 illustrates the arrangement of an osseointegrated dental crown according to the prior art;
- Fig. 2a is a three-dimensional perspective schematic view in vertical section of the osseointegrated dental crown according to the invention;
- Fig. 2b is a three-dimensional perspective schematic view of a part of the osseointegrated dental crown of Fig. 2a, forming the endosseous fixture;
- Fig. 2c is a three-dimensional perspective schematic view of a part of the osseointegrated dental crown of Fig. 2a, forming an abutment;
- Fig. 3a is a view similar to the view of Fig. 2c, but in an enlarged scale;
- Fig. 3b is a three-dimensional perspective schematic view in vertical section of the abutment of Fig. 3a;
- Fig. 3c is a view similar to the view of Fig 2b, but in an enlarged scale;
- Fig. 3d is a three-dimensional perspective schematic view in vertical section of the endosseous fixture of Fig. 3c;
- Fig. 4 is a view in vertical section of the osseointegrated dental crown of Fig. 2a.

In particular, the present invention provides an osseointegrated dental crown, comprising an endosseous fixture (1a) and an abutment (2a) connected by means of a fixture connection and fixed by means of a fixing screw (5), characterized in that said abutment (2a) comprises an insertion projection (2b) of prismatic shape having a lower end provided with a prismatic seat (2c), and said fixture (1a) comprises a prismatic cavity (1b) of corresponding and complementary shape to said insertion projection (2b) of said abutment (2a) and a protrusion (1c) projecting in said prismatic cavity (1b) and of corresponding and complementary shape to said prismatic seat (2c) of said abutment (2a), in that said endosseous fixture (1a) has an annular external top edge (1e) of said prismatic cavity (1b) and a vertical central threaded hole (1d) extending from said protrusion (1c), while said abutment (2a) has an annular external shoulder (2e) at the base of said insertion projection (2b) and a vertical central through hole (2d), coaxial with respect to said threaded hole (1d), in that said top edge (1e) of said prismatic cavity (1c) and said shoulder (2e) of said insertion projection (2b) are juxtaposed at a contact plane (P) between abutment (2a) and fixture (1a), and in that said fixing screw (5) is engaged, with the stem, by screwing in said threaded hole (1d), is inserted, with the related head part, in said through hole (2d), and produces the stable coupling of said abutment (2a) and of said endosseous fixture (1a), said head being arranged substantially at said contact plane (P).

Moreover, the osseointegrated dental crown according to the present invention is characterized in that said fixture (1a) and said abutment (2a) are mutually engaged and prevented from rotating by means of a double prismatic coupling of male-female type, respectively between said insertion projection (2b) and said prismatic cavity (1b), and said protrusion (1c) and said prismatic seat, and in that said double prismatic coupling is obtained by means of said complementary parts (2b, 1b; 1c, 2c) having respective generally truncated pyramidal matched shapes, arranged substantially below said contact plane (P).

Furthermore, the osseointegrated dental crown according to the present invention is characterized in that said parts (2b, 1b; 1c, 2c) that form said prismatic coupling of male-female type between said insertion projection (2b) of said abutment (2a) and said prismatic cavity (1b) of said fixture (1a) are configured to facilitate extraction of the abutment (2a) or of an equivalent transfer, with respect to said fixture (1a).

### Detailed description of an example of embodiment

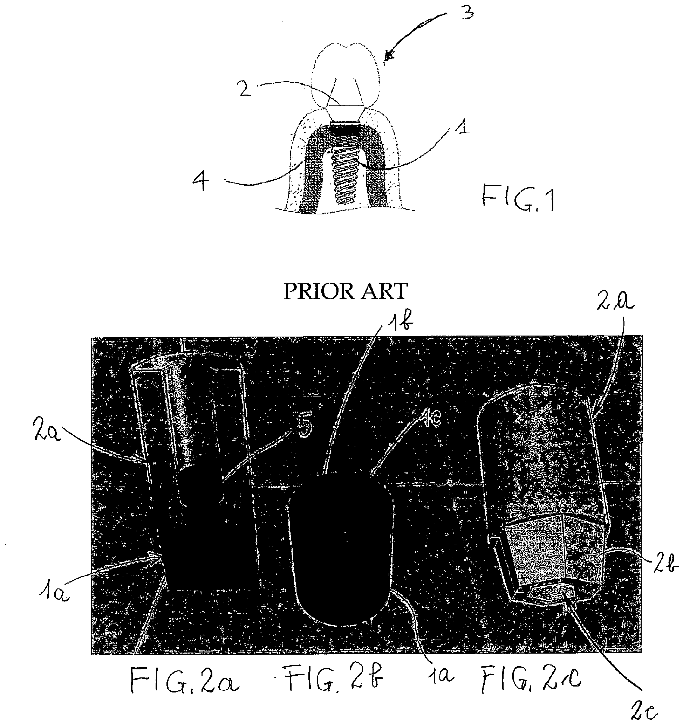

With reference to the accompanying drawings, the components of an osseointegrated fixture are identified schematically. In Fig. 1, illustrating the prior art, the numeral 1 indicates a generic fixture and its positioning with respect to a section of the mandible bone 4. The numeral 2 indicates a generic form of the abutment positioned at the head of the fixture and adapted to support the crown 3. The present invention relates to the osseointegrated dental crown between abutment and fixture, i.e. to the mechanical coupling between the base of the abutment 2 and the head of the fixture 1.

With reference to Figs. 2a to 2c, these indicate the details of the head of the fixture 1a, of the base of the abutment 2a and a sectional view of their coupling by means of a suitable fixing screw 5. Also illustrated are the profiles of the components and their interpenetration, and in particular the shape of the hexagonal truncated pyramidal projection 2b and the corresponding prismatic cavity 1b obtained on the head of the fixture, as well as the hexagonal based protrusion 1c positioned centrally in the lowest point of the cavity 1b and the corresponding housing 2c obtained in the abutment.

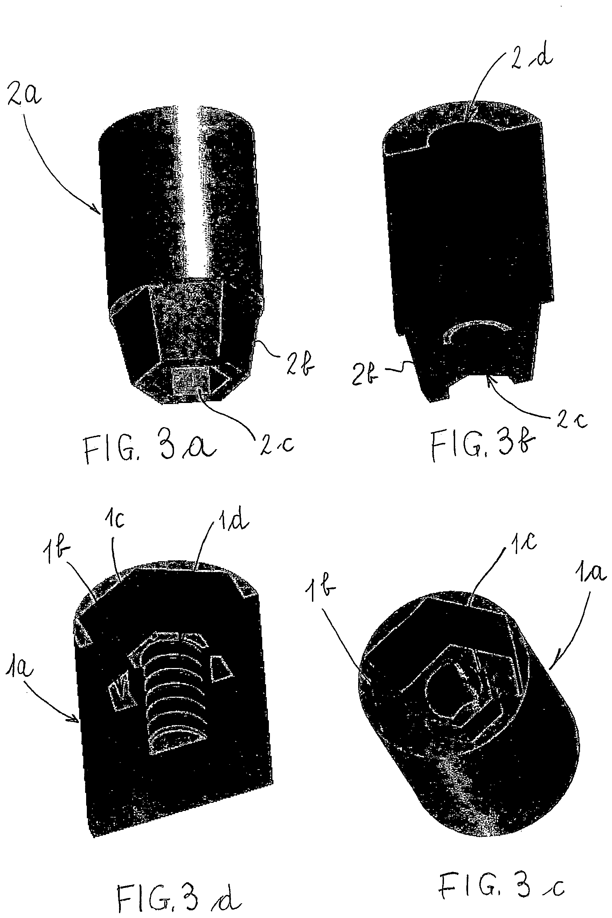

With reference to Figs. 3a to 3d, these indicate the head of the fixture and the base of the abutment, depicted in their entirety and in a sectional view, showing the cylindrical cavity 2d obtained in the abutment for insertion of the fixing screw 5 and the corresponding thread 1d obtained in the hexagonal protrusion 1c and in depth inside the head of the abutment 1a.

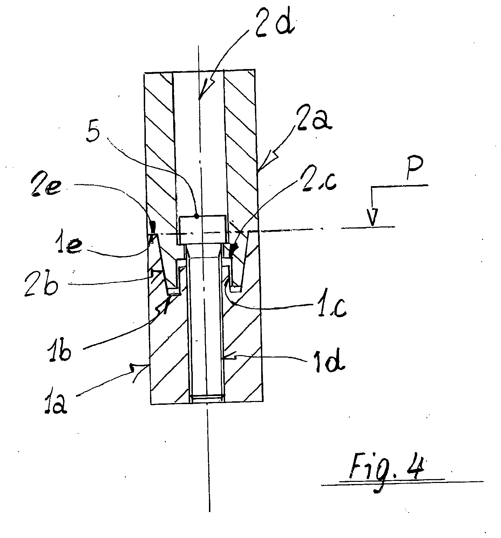

With reference to Fig. 4, this illustrates a sectional view of the connection assembled by means of the fixing screw 5 and in particular the housing of the head of the screw that, following fixing, partially occupies the space available at the hollow base of the profile 2b and is thus positioned partially below and substantially at the plane of the connection indicated with P.

The solution proposed has high stability against loosening due to the presence of the double anti-rotation constraint provided by the hexagonal truncated pyramidal coupling (1b, 2b) and by the further constraint provided by coupling between the hexagonal protrusion 1c at the base of the connection and the prismatic seat 2c in the abutment 2a. The double interpenetration of the profiles with opposite male-female characteristics maximizes the stability of the abutment with respect to the fixture and guarantees, in the prosthetic phase, stable, precise and repeatable mutual positioning of the aforesaid components while maintaining relative ease of insertion and extraction, due to the pseudo tapered profiling of the profile 2b with respect to the corresponding countersink 1b.

Added to the double anti-rotation constraint provided by the faces of the truncated pyramid 1b and by the small hexagon 1c is the further stability due to the frictional coupling that is created through pseudo conometric interpenetration between abutment and head of the fixture.

The geometry proposed allows in-depth insertion of the head of the fixing screw 5 to ensure greater ease of restoration. To achieve said object, the base of the hexagonal truncated pyramid 2b and the depth of its walls are such as to accommodate the partial extension of the cylindrical cavity 2d necessary for insertion of the screw and to allow tightening thereof in the thread obtained inside the hexagon 1c and in the head of the fixture 2a. As a result of these characteristics, the head of the screw can be partially housed in the base of the abutment 2a and at the plane P that delimits the contact edge between fixture and abutment.

The invention can be implemented with technical equivalents, with materials or with additional measures suitable for the object and for the scope of application. The structure and size of the parts of which it is formed may vary appropriately, but consistent with the solution proposed.

By way of non-limiting example, the geometrical shapes of the anti-rotation constraints (1b,2b) and/or (1c,2c) or both, may be varied, adopting different shapes, but consistent with the anti-rotation object, such as pentagonal, octagonal and more generally other polyhedral shapes or multi-lobed figures with the same functions of locking and tightening.

When the type, size and application context of the crown varies, it will be possible to vary the depth of the walls of the abutment, of the section of the fixing screw in order to obtain optimal inclination of the corresponding profiles (1b,2b) to allow projection of the abutment or of any transfers used to take pick up impressions.

The osseointegrated dental crown proposed is solid, precise, and easy to assemble, with excellent characteristics of stability and allows numerous critical points of restoration found in the solutions commonly employed to be overcome.

The housing of the fixing screw and in particular of its head in a very low position enables the use of the whole of the biological width allowed by the base of the abutment and this makes it possible to overcome esthetic and restoration problems caused by emergence of the fixing screws, which characterize external hexagons and at times limit their use.

The solution proposed allows, due to the hexagonal truncated pyramidal profile, operation with excellent restoration angles and with extreme ease of extraction and repositioning of the components. This makes it possible to overcome the typical limit of internal hexagon connections regarding pick up impressions, which are difficult to take fastening the transfers rigidly to one another, and which often make it necessary to use decidedly less precise impression methods.

## Claims

1. Osseointegrated dental crown, comprising an endosseous fixture (1a) and an abutment (2a) connected by means of a fixture connection and fixed by means of a fixing screw (5), **characterized in that** said abutment (2a) comprises an insertion projection (2b) of prismatic shape having a lower end provided with a prismatic seat (2c), and said fixture (1a) comprises a prismatic cavity (1b) of corresponding and complementary shape to said insertion projection (2b) of said abutment (2a) and a protrusion (1c) projecting in said prismatic cavity (1b) and of corresponding and complementary shape to said prismatic seat (2c) of said abutment (2a), **in that** said endosseous fixture (1a) has an annular external top edge (1e) of said prismatic cavity (1b) and a vertical central threaded hole (1d) extending from said protrusion (1c), while said abutment (2a) has an annular external shoulder (2e) at the base of said insertion projection (2b) and a vertical central through hole (2d), coaxial with respect to said threaded hole (1d), **in that** the top edge (1e) of said prismatic cavity (1b) and said shoulder (2e) of said insertion projection (2b) are juxtaposed at a contact plane (P) between abutment (2a) and fixture (1a), **and in that** said fixing screw (5) is engaged, with the stem, by screwing in said threaded hole (1d), is inserted, with the related head part, in said through hole (2d), and produces the stable coupling of said abutment (2a) and of said endosseous fixture (1a), said head being arranged at said contact plane (P).

2. Osseointegrated dental crown according to claim 1, **characterized in that** said fixture (1a) and said abutment (2a) are mutually engaged and prevented from rotation by means of a double prismatic coupling of male-female type, respectively between said insertion projection (2b) and said prismatic cavity (1b), and said protrusion (1c) and said prismatic seat (2c), **and in that** said double prismatic coupling is obtained by means of said complementary parts (2b, 1b; 1c, 2c) having respective generally truncated pyramidal matched shapes, arranged substantially below said contact plane (P).

3. Osseointegrated dental crown according to claim 2, **characterized in that** said parts (2b, 1b; 1c, 2c) that form said prismatic coupling of male-female type between said insertion projection (2b) of said abutment (2a) and said prismatic cavity (1b) of said fixture (1a) are configured to facilitate extraction of the abutment (2a) or of an equivalent transfer, with respect to said fixture (1a).

## Patentansprüche

1. Osteointegrierte Zahnprothese, umfassend ein enossales Implantat (1a) und ein Abutment (2a), das mittels einer Implantatverbindung verbunden und mittels einer Befestigungsschraube (5) befestigt ist, **dadurch gekennzeichnet, dass** besagtes Abutment (2a) einen prismatisch geformten Einsetzungsüberhang (2b) mit einem unteren Ende umfasst, das mit einem prismatischen Sitz (2c) versehen ist, und besagtes Implantat (1a) umfasst einen prismatischen Hohlraum (1b) mit einer Form, die dem besagten Einsetzungsüberhang (2b) des besagten Abutments (2a) entspricht und dazu komplementär ist, und einen Vorsprung (1c) umfasst, der in den prismatischen Hohlraum (1b) hineinragt und eine Form aufweist, die dem prismatischen Sitz (2c) des besagten Abutments (2a) entspricht und dazu komplementär ist, **dadurch gekennzeichnet, dass** besagtes enossales Implantat (1a) eine äußere ringförmige Oberkante (1e) des besagten prismatischen Hohlraums (1b) und ein vertikales zentrales Gewindeloch (1d) aufweist, das durch den Vorsprung (1c) erweitert wird, während das besagte Abutment (2a) eine äußere ringförmige Schulter (2e) in Übereinstimmung mit der Basis des besagten Einsetzungsüberhangs (2b) und ein vertikales zentrales Durchgangsloch (2d) aufweist, das koaxial zu dem besagten Gewindeloch (1d) ist, **dadurch gekennzeichnet, dass** besagte Oberkante (1e) des besagten prismatischen Hohlraums (1b) und besagte Schulter (2e) des besagten Einsetzungsüberhangs (2b) in Übereinstimmung mit einer Kontaktebene (P) zwischen Abutment (2a) und Implantat (1a) nebeneinander liegen, **und dadurch gekennzeichnet, dass** besagte Befestigungsschraube (5) mit dem Schaft durch Anschrauben in das besagte Gewindeloch (1d) in Anspruch genommen und mit dem diesbezüglichen Kopfteil in das besagte Durchgangsloch (2d) eingeführt wird und die stabile Kopplung des besagten Abutments (2a) und des besagten enossalen Implantats (1a) bewirkt, wobei besagter Kopf im Wesentlichen in Übereinstimmung mit der besagten Kontaktebene (P) angeordnet ist.

2. Osteointegrierte Zahnprothese gemäß Anspruch 1, **dadurch gekennzeichnet, dass** besagtes Implantat (1a) und besagtes Abutment (2a) durch eine doppelprismatische Kopplung vom Typ Innen-Außengewinde zwischen dem besagten Einsetzungsuberhang (2b) und dem besagten prismatischen Hohlraum (1b), bzw. zwischen dem besagten Vorsprung (1c) und dem besagten prismatischen Sitz (2c) wechselseitig in Anspruch genommen werden und gegen Drehung gesichert sind, **und dadurch gekennzeichnet, dass** besagte doppelprismatische Kopplung durch die besagten komplementären Teile (2b, 1b; 1c, 2c) bewirkt wird, die entsprechende, im Allgemeinen pyramidenstumpfförmig angepasste Formen aufweisen und im Wesentlichen unterhalb dieser Kontaktebene (P) angeordnet sind.

3. Osteointegrierte Zahnprothese gemäß Anspruch 2, **dadurch gekennzeichnet, dass** besagte Teile (2b, 1b; 1c, 2c), die die besagte prismatische Kopplung vom Typ Innen-Außengewinde zwischen dem besagten Einsetzungsüberhang (2b) des besagten Abutments (2a) und dem besagten prismatischen Hohlraum (1b) des besagten Implantats (1a) realisieren, konfiguriert sind, um das Herausziehen des Abutments (2a), beziehungsweise eines äquivalenten Transfers in Bezug auf besagtes Implantat (1a) zu erleichtern.

## Revendications

1. Prothèse dentaire ostéointégrée, comprenant un implant endo-osseux (1a) et un pilier (2a) reliés par une connexion d'implant et fixés au moyen d'une vis de fixation (5), **caractérisée par le fait que** ledit pilier (2a) comprend une proéminence d'insertion (2b) de forme prismatique ayant une extrémité inférieure munie d'un siège prismatique (2c), et que ledit implant (1a) comprend une cavité prismatique (1b) d'une forme correspondante et complémentaire à ladite proéminence d'insertion (2b) dudit pilier (2a) et d'une saillie (1c) faisant saillie dans ladite cavité prismatique (1b) et de forme correspondante et complémentaire audit siège prismatique (2c) dudit pilier (2a), **par le fait que** ledit implant endo-osseux (1a) a un bord supérieur (1e) annulaire à l'extérieur de ladite cavité prismatique (1b) et un trou vertical central fileté (1d) prolongé par ladite saillie (1c), tandis que ledit pilier (2a) a un épaulement (2e) annulaire externe à la base de ladite proéminence d'insertion (2b) et un trou vertical central passant (2d), coaxial par rapport audit trou fileté (1d), **par la fait que** ledit bord supérieur (1e) de ladite cavité prismatique (1b) et ledit épaulement (2e) de ladite proéminence d'insertion (2b) sont juxtaposés au niveau d'un plan (P) de contact entre le pilier (2a) et l'implant (1a), **et par le fait que** ladite vis de fixation (5) est engagée, avec la tige, pour vissage ledit trou fileté (1d), est inséré, avec la partie de tête relative, dans ledit trou passant (2d), et réalise le couplage stable dudit pilier (2a) et dudit implant endo-osseux (1a), ladite tête étant disposée substantiellement au niveau dudit plan (P) de contact.

2. Prothèse dentaire ostéointégrée selon la revendication 1, **caractérisée par le fait que** ledit implant (1a) et ledit pilier (2a) sont mutuellement engagés et empêchés de tourner au moyen d'un double couplage prismatique de type mâle-femelle, respectivement entre ladite proéminence d'insertion (2b) et ladite cavité prismatique (1b) et entre ladite saillie (1c) et ledit siège prismatique (2c), **et par la fait que** ledit couplage prismatique double est réalisé au moyen desdites parties complémentaires (2b, 1b ; 1c, 2c) ayant des formes générales conjuguées respectives de pyramides tronquées, disposées substantiellement au-dessous dudit plan (P) de contact.

3. Prothèse dentaire ostéointégrée selon la revendication 2, **caractérisée par la fait que** lesdites parties (2b, 1b ; 1c, 2c) qui réalisent ledit couplage prismatique de type mâle-femelle entre ladite proéminence d'insertion (2b) dudit pilier (2a) et ladite cavité prismatique (1b) dudit implant (1a) sont configurés pour faciliter l'extraction du pilier (2a), respectivement d'un transfert équivalent, par rapport audit implant (1a).
